# EUROPEAN PATENT APPLICATION

(11) **EP 1 819 012 A2**
(43) Date of publication of application: **15.08.2007**
(21) Application number: 07101833.7
(22) Date of filing: 06.02.2007
(51) Int. Cl.: H01Q 1/00

(54) **Antenna signal processing apparatus**

(30) Priority: 10.02.2006 GB 0602749
(71) Applicant: Thales Holdings UK Plc, Addlestone, Surrey KT15 2NX (GB)
(72) Inventor: Stove, Andrew Gerald, Hove BN3 5NL (GB)
(74) Representative: Lucas, Laurent Jacques

(57) **Abstract**

An antenna (10) comprises at least one accelerometer (15) capable of monitoring mechanical vibration. Associated signal processing means (18) provides a transfer function which is used to convert signals received from the accelerometer into an error estimate, which can then be subtracted from signals received from the antenna.

## Description

The present invention relates to a method and apparatus for correcting for errors induced by antenna vibration. Particularly, but not exclusively, the invention relates to a method and apparatus for correcting for errors induced by vibration in phased array antennas.

It is known that an antenna for a radar can be constructed from a large number of separate antenna elements and that the overall beam pattern from the radar can be steered by controlling the phase and, optionally, the amplitude of the signals emitted from each element. The separate antenna elements may be fed from a single transmitter, or each element may contain its own transmitter. Each element may also include electronically controllable means for setting the phase of the emitted signal thereby enabling the beam pattern to be controlled electronically.

It is apparent that if the beam pattern from a radar is to be accurately steered then the phases of the signals transmitted by the elements must be carefully controlled. One potential source of errors in the beam pattern is deformations of the physical size and shape of the elements due to the effects of vibration and another is movement of an antenna element relative to the other elements.

Vibration, or microphony as it is otherwise known, of antenna elements can thereby lead to distortion in the beam pattern emitted by the antenna elements. Such distortion can give rise to high sidelobe levels resulting in spurious positions being associated with targets, and to an increased possibility of targets being hidden beneath clutter or jamming which can enter the receiver through these sidelobes. In extreme cases the main-lobe gain of the antenna can be significantly reduced, thereby reducing the detectability of the radar's intended targets.

One proposed solution for addressing the potential problems due to antenna flexure and vibration is to ensure that both the individual antenna elements and the overall antenna assembly are sufficiently rigid for the effects of vibration and other mechanical disturbances to be negligible. This solution has the disadvantage, however, that it increases the weight, bulk and cost of the antenna which is a particular problems for airborne radars where the vibration is more severe and increased rigidity is required.

Another approach is to correct for variations in the mechanical position of the antenna elements or in their electrical phase due to deformation, which occur relatively slowly as a result of changes in temperature, ageing or mechanical abuse by calibration using special field calibration sources placed in the radar. It is known that errors due to temperature changes can be compensated by using temperature sensing elements within the array. Such systems suffer from the disadvantage however that they can only compensate for variations that occur slowly.

The present invention is intended to provide solutions or amelioration of the vibration problems with which these other methods can provide little or no assistance.

A first aspect of the invention provides a method of compensating for a vibration induced error in a signal emitted or received by an antenna, the method comprising measuring the vibration of said antenna, estimating the error induced by the vibration and correcting the signal transmitted or received by the antenna as a function of the estimated error.

The antenna may have at least one accelerometer associated therewith, and the step of measuring may then include detecting a signal output from the or each accelerometer.

A second aspect of the invention provides communications apparatus comprising an antenna array and signal processing apparatus, the antenna array comprising a plurality of antenna elements, at least one of which has associated therewith an accelerometer operable to measure mechanical vibration of said antenna element, and said signal processing apparatus being operable to compensate for antenna transmission or reception errors on the basis of said measured mechanical vibration.

The apparatus may be calibrated by applying mechanical vibration to said antenna array, measuring response signals generated at the antenna array and at the or each accelerometer, and determining a transfer function between said accelerometer signals and said antenna array signals.

A further aspect of the invention provides an antenna including means for receiving a signal and means for measuring mechanical acceleration of said receiving means.

An embodiment of the invention will now be described by way of example and with reference to the following drawings in which:-
Figure 1 is a schematic diagram of an antenna according to a first embodiment of the invention;
Figure 2 is a schematic diagram of an antenna according to a second embodiment of the invention;
Figure 3 is a schematic diagram of processing apparatus connected to an antenna element according to the first embodiment of the invention; and
Figure 4 is a flow diagram showing a process of calibrating the processing apparatus illustrated in figure 3.

In the following description, specific implementations of the invention are described. It will be appreciated by the reader that these are provided by way of example only, and are not intended to provide restriction or limitation on the scope of the invention, which is defined in the appended claims.

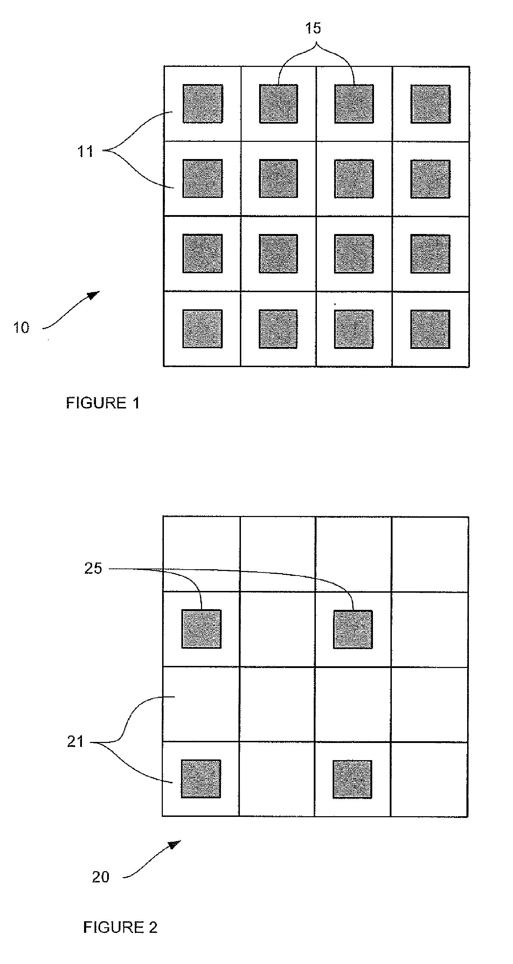

Referring to Figure 1, an antenna 10 according to a first embodiment of the invention comprises a plurality of antenna elements 11. Each antenna element 11 is provided with a solid state accelerometer 25 for instantaneously measuring the vibration of the respective antenna element.

In an alternative embodiment, if the vibration performance of the array is sufficiently well characterised, it will be possible to deduce the complete effects of vibration both between and within the individual antenna elements from measurements at a single point on the array. Consequently, only one accelerometer will be required in such a case.

Alternatively a relatively small number of accelerometers may be used, each sensing the vibration within a separate sub array of the array. That is, a subset of the total number of antenna elements can be provided with an associated accelerometer.

With reference to Figure 2, a phased antenna array 20 according to a second embodiment of the present invention comprises a plurality of antenna elements 21 and a plurality of solid state accelerometers 25. Each accelerometer 25 is associated with a set of neighbouring array elements 21 and measures the collective vibration of the antenna elements in the corresponding set.

In addition to being able to compensate for the effects of microphony within an array element the data from the accelerometer may also be used to correct for distortions across the whole array of antenna elements. The acceleration signals can be integrated twice to estimate the displacement of the antenna element. Any errors resulting from drifts in the accelerometer signals can be corrected by high pass filtering the accelerometer signals before integration to remove the effects of the accelerometer drift and of platform motion. The filter is cut off at that lowest frequency at which significant vibration will be induced into the array.

In order to avoid over-compensating for displacements of the whole array which can also be measured by, for example, the platform's own motion sensors, in one embodiment only the differential movements between the antenna elements are compensated for within the element. This may be done by comparing the displacement measured on the antenna element with that measured on a neighbouring element or with that measured at a single chosen reference element.

The microwave phase and amplitude errors induced by the vibration should be multiplied by the phase shift due to the movement of the element with respect to its neighbours and the demanded phase and amplitude steering for the element should be divided by the complex error induced by the vibration and the net complex correction applied to the element. If amplitude control is not required, or the effects of microphony on the amplitude response of the array are negligible, then the relative phases can just be added and subtracted from one another as appropriate.

If the vibration performance of the array is sufficiently well characterised, it will be possible to deduce the complete effects of vibration both between and within the individual antenna elements from measurements at a single point on the array. In such a case, only one accelerometer will be required. Alternatively, a relatively small number of accelerometers may be used, each sensing the vibration within a separate sub array of the array.

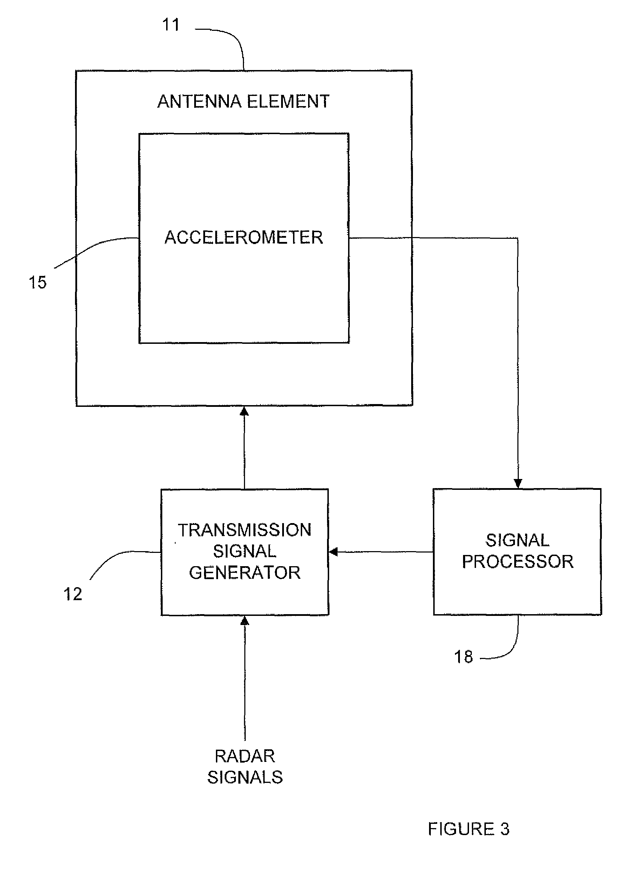

Figure 3 illustrates an antenna element 11 according to the first embodiment of the invention. The antenna element includes a solid state accelerometer 15 in communication with signal processing means 18. The accelerometer 15 generates an electrical signal in response to a vibration of the antenna element 15. The signal processing means 18 processes the electrical signal received from the accelerometer 15 in order to determine the acceleration or vibration of the antenna element 15. The signal processing means then estimates the phase shift corresponding to the measured vibration by applying an electro-mechanical transfer function. An appropriate correction signal based on the estimated phase shift is then applied to the transmitter 12 of the antenna element 15 so that a desired output signal from the antenna element 11 is achieved.

The use of low-cost light weight solid state accelerometers and a small amount of digital signal processing enables the weight of the antenna to be substantially reduced

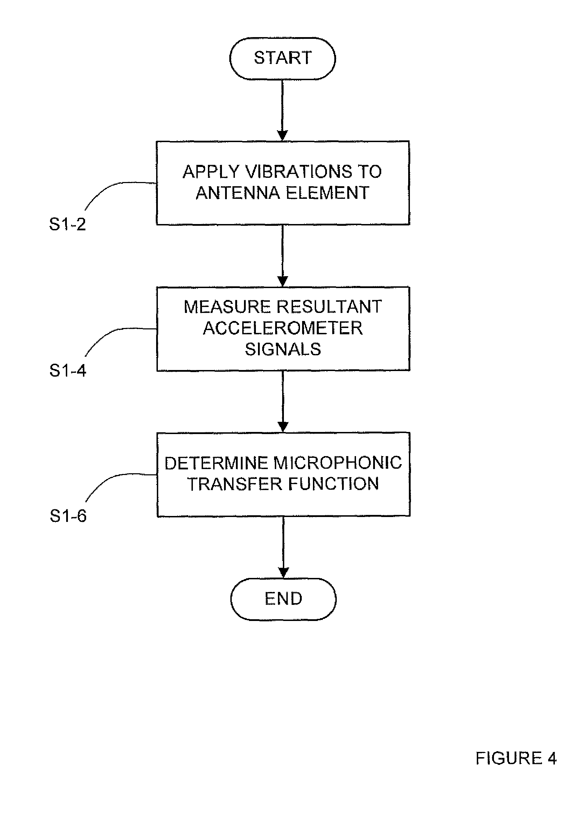

A method for calibrating the phase shifts induced in a signal transmitted from an antenna element by vibration of the antenna element will now be described in accordance with Figure 4.

The effect of vibration is firstly in step S1-2 measured on an antenna element representative of one of the antenna elements of an antenna array. A vibration is applied to the representative antenna element and the amplitude of the vibration is measured in step S1-4. The resulting phase shift in the signal emitted from the antenna element with respect to the imposed vibration is then measured over a range of frequencies. The range of frequencies selected for this purpose is the range of frequencies at which significant vibration may be expected to be induced by the platform on which the antenna array will be mounted and which induces significant changes in the response of the array modules. From the measurements an electro-mechanical transfer function is calculated for the antenna element using Fourier analysis techniques, in step S1-6. Then, this transfer function is stored in memory of the signal processor 18 shown in figure 3.

The calculation is based on the assumption that the microphonic response is linear, which is generally sufficiently close to being true to allow the technique to correct for the effects of vibration within the element.

Alternative embodiments may model non-linear behaviour, if this is required, but this will increase computational complexity.

For modern arrays with solid-state control of the microwave phase and amplitude, the vibration effects will be predominantly due to the bond leads, connectors etc., rather than to effects within the control elements and will be predominantly independent of the phase and amplitude setting of the element, so the response need only be measured at a single phase and amplitude state. It is possible, however to measure the response for a range of phase and amplitude settings.

When a vibration is measured in real time on an antenna element, the calculated electro-mechanical transfer function is applied to the measured signal by a signal processing unit in order to determine the estimated phase shift corresponding to that vibration. The resulting correction signal is calculated and applied to the command signal of the transmitter feeding the antenna element in order to achieve the desired output signal.

Although in this embodiment the phase shift of the signal emitted by the representative antenna element is measured, in alternative embodiments the change in amplitude of the signal resulting from an applied vibration may be measured. Accordingly, the change in amplitude of a transmitted signal can be estimated for a vibrating element. In further embodiments of the invention, both the amplitude change and the phase shift may be measured. In these cases, the transfer function then applied when compensating for measured real time vibration can compensate for amplitude change and phase shift as required.

Although in the specific embodiment described above with reference to the drawings, the technique is applied to transmit arrays, it will be apparent that the technique is applicable to active arrays using either transmit, receive or combined transmit-receive elements, or for passive arrays which contain only phase shifters or attenuators. The latter type of antenna array may be used for radar and communication purposes. Similar techniques may also be used for other array applications such as sonar systems. Furthermore, the technique may be applicable to conventional antennas such as parabolic reflectors if they are provided with means for controlling the electrical phase at each point in real time.

Many further modifications and variations will suggest themselves to those versed in the art upon making reference to the foregoing illustrative embodiments, which are given by way of example only and which are not intended to limit the scope of the invention, that being determined solely by the appended claims.

## Claims

1. A method of compensating for a vibration induced error in a signal emitted or received by an antenna, the method comprising:
measuring the vibration of said antenna
estimating the error induced by the vibration and
correcting the signal transmitted or received by the antenna as a function of the estimated error.

2. A method in accordance with claim 1 wherein the antenna has at least one accelerometer associated therewith, and the step of measuring includes detecting a signal output from the or each accelerometer.

3. A method in accordance with claim 2 wherein the step of estimating comprises converting the or each accelerometer output signal by means of an error transfer function.

4. A method in accordance with claim 3 wherein said step of converting is performed with respect to phase of the or each accelerometer output signal.

5. A method in accordance with claim 3 wherein said step of converting is performed with respect to amplitude of the or each accelerometer output signal.

6. Communications apparatus comprising an antenna array and signal processing apparatus, the antenna array comprising a plurality of antenna elements, at least one of which has associated therewith an accelerometer operable to measure mechanical vibration of said antenna element, and said signal processing apparatus being operable to compensate for antenna reception or transmission errors on the basis of said measured mechanical vibration.

7. Apparatus in accordance with claim 6 wherein the signal processing apparatus includes error estimation means operable to receive a signal from the or each accelerometer and to generate an error estimate in response.

8. Apparatus in accordance with claim 7 wherein the error estimation means is operable to generate said error estimate in response to phase of the or each accelerometer signal.

9. Apparatus in accordance with claim 7 wherein the error estimation means is operable to generate said error estimate in response to amplitude of the or each accelerometer signal.

10. Apparatus in accordance with claim 7 wherein the signal processing means is operable to correct for mechanical vibration on the basis of said estimate.

11. Apparatus in accordance with claim 10 wherein the signal processing means is operable to subtract said error estimate from signals received from each antenna element.

12. A method of calibrating apparatus in accordance with claim 6 comprising applying mechanical vibration to said antenna array, measuring response signals generated at the antenna array and at the or each accelerometer, and determining a transfer function between said accelerometer signals and said antenna array signals.

13. A method in accordance with claim 12 wherein the step of applying mechanical vibration includes applying mechanical vibration at frequencies in a range within which vibration can be expected in normal operation of the antenna.

14. An antenna including means for receiving a signal and means for measuring mechanical acceleration of said receiving means.

15. Apparatus substantially as disclosed herein, with reference to the accompanying drawings.

16. Method substantially as disclosed herein, with reference to the accompanying drawings.
